# EUROPEAN PATENT APPLICATION

(11) **EP 4 786 820 A1**
(43) Date of publication of application: **05.08.2026**
(21) Application number: 25202405.4
(22) Date of filing: 16.09.2025
(51) Int. Cl.: F16H 1/22

(54) **COMPACT BEVEL GEAR SPLIT TORQUE GEARBOX**

(30) Priority: 31.01.2025 US 202519042333
(71) Applicant: The Boeing Company, Arlington, VA 22202 (US)
(72) Inventor: Bradford, Mark Jerome, Arlington, 22202 (US); Pritt, Marshall Edward, Arlington, 22202 (US)
(74) Representative: Witte, Weller & Partner Patentanwälte mbB

(57) **Abstract**

A compact bevel gear split torque gearbox is disclosed. A disclosed example apparatus includes a first pinion to receive an input torque, a second pinion operatively coupled to the first pinion, an output gear operatively coupled to the first and second pinions, and a continuously variable (CV) adapter operatively coupled between the first and second pinions, the CV adapter having a helical spline.

## Description

### FIELD OF THE DISCLOSURE

This disclosure relates generally to transmissions and, more particularly, to a compact bevel gear split torque gearbox.

### BACKGROUND

Split torque gearboxes can reduce gear size by utilizing more than torque path (via parallel gear meshes) to transmit power. While split torque gearboxes can increase gear count, they are often associated with a reduced smaller gearbox footprint and weight. However, parallel torque paths create indeterminate torsional characteristics and, thus, can make it difficult to obtain desirable torque splits because a stiffer path can transfer a relatively higher proportion of transmitted torque. Some known implementations may rely on a compliant shaft for torque sharing, but such implementations can require expensive and/or exotic materials.

### SUMMARY

A disclosed example apparatus includes a first pinion to receive an input torque, a second pinion operatively coupled to the first pinion, an output gear operatively coupled to the first and second pinions, and a continuously variable (CV) adapter operatively coupled between the first and second pinions, the CV adapter having a helical spline.

An example transmission includes a housing, first and second torque-splitting pinions, at least one of the first or second pinions to receive a torque input, and a continuously variable (CV) adapter operatively coupled between the first and second pinions, the CV adapter including a helical spline.

An example method of producing a gearbox includes placing a continuously variable (CV) adapter between a first pinion and a second pinion to couple rotation therebetween, the CV adapter having a helical spline, the first pinion to receive a torque input, and placing an output gear to engage: (i) a first output of the first pinion and (ii) a second output of the second pinion.

### BRIEF DESCRIPTION OF THE DRAWINGS

FIG. 1 is an example gearbox in accordance with teachings of this disclosure.
FIG. 2 is a cross-sectional view of the example gearbox of FIG. 1.
FIG. 3 is another cross-sectional view of the example gearbox of FIGS. 1 and 2.
FIG. 4 is an exploded view of the example gearbox of FIGS. 1-3.
FIG. 5 is a detailed view of an example output gear that can be implemented in examples disclosed herein.
FIG. 6 is a detailed view of an example continuously variable gear that can be implemented in examples disclosed herein.
FIG. 7 is a flowchart representative of an example method to produce examples disclosed herein.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

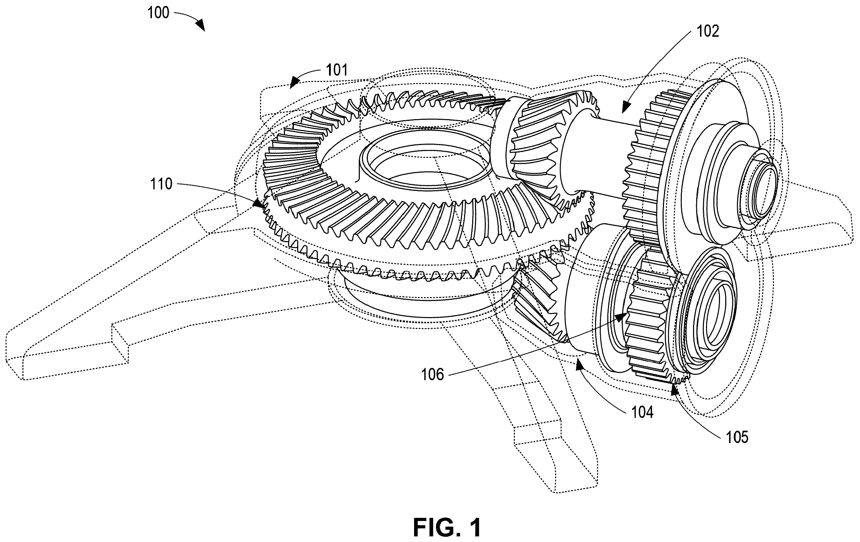

FIG. 1 is an example gearbox 100 in accordance with teachings of this disclosure. The gearbox 100 of the illustrated example includes a housing (e.g., a base, a mount, etc.) 101, a first pinion (e.g., an input pinion, an input gear, etc.) 102, a second pinion (e.g., a coupling pinion, an intermediary pinion, etc.) 104, a coupling gear (e.g., a coupling spur gear) 105, a continuously variable (CV) adapter 106, and an output gear (e.g., an output bevel gear, an output gear wheel, a torque combining gear, etc.) 110, which is implemented as a back-to-back bevel gear (e.g., a double-sided bevel gear, etc.) in this example. In other examples, the output gear 110 is implemented as, but is not limited to, multiple bevel gears (e.g., on a common shaft), a single bevel gear, etc. In other words, examples disclosed herein can be implemented as any other appropriate gearing implementation that receives multiple inputs thereto.

In operation, an input torque is provided to the first pinion 102 which, in turn, causes rotation of the second pinion 104 via the CV adapter 106. As a result of the coupled rotation, the input torque splitting between the first pinion 102 and the pinion 104 is enabled, and, in turn, torque of the first pinion102 and the second pinion 104 is provided to the output gear 110. In turn, the output gear 110 is utilized to drive and/or provide torque to another object, component and/or assembly.

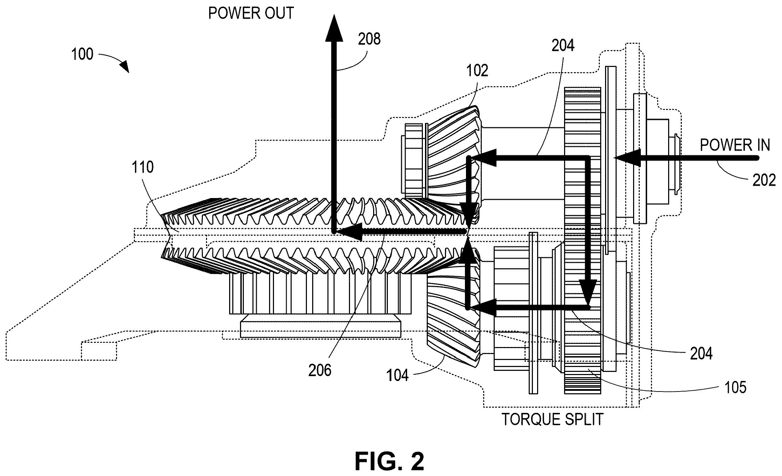

As will be discussed in greater detail below in connection with FIGS. 2-7, examples disclosed herein enable a highly compact, and lightweight gearbox design and/or arrangement with reduced part complexity. Examples disclosed herein utilize the CV adapter 106 to enable highly efficient torque splitting between the first pinion 102 and the second pinion 104 while enabling reduced volume and weight, which can be particularly beneficial in vehicle and/or aerospace applications, amongst other applications. To that end, the CV adapter 106 of the illustrated example can utilize a helical spline to interface to the second pinion 104 and a straight spline to interface with the coupling gear 105 for engaging the first pinion 102. As a result, examples disclosed herein can effectively split and transfer input torque while occupying relatively less space and volume. Further examples disclosed herein enable reduced weight in comparison to conventional approaches.

Examples disclosed herein can be utilized in any appropriate application or setting that utilizes gearing and/or transmissions. Accordingly, examples disclosed herein can be utilized in any appropriate gearbox and/or transmission including, with applications and settings including but not limited to, vehicles. The vehicles can include, but are not limited to, aircraft, ground-based vehicles, rail-based vehicles, seacraft, submersibles, and spacecraft. Examples disclosed herein can relate to equipment, including that which is used in industrial or manufacturing settings.

FIG. 2 is a cross-sectional view of the example gearbox 100 of FIG. 1. In the illustrated example of FIG. 2, a general distribution of torque transfer is shown. According to examples disclosed herein, an input power/torque 202 to is provided to the first pinion 102 and, in turn, the torque is split and/or distributed between the first pinion 102 and the second pinion 104, as generally indicated by arrows 204, via the coupling gear 105 and the CV adapter 106. In this example, the first pinion 102 and the second pinion 104 are implemented as pinion gears, and the coupled movement of the first pinion 102 and the second pinion 104 is utilized to apply power to opposing sides of the output gear 110, as generally indicated by an arrow 206. Accordingly, the output gear 110 provides output power (e.g., output torque, output rotational energy, etc.) 208.

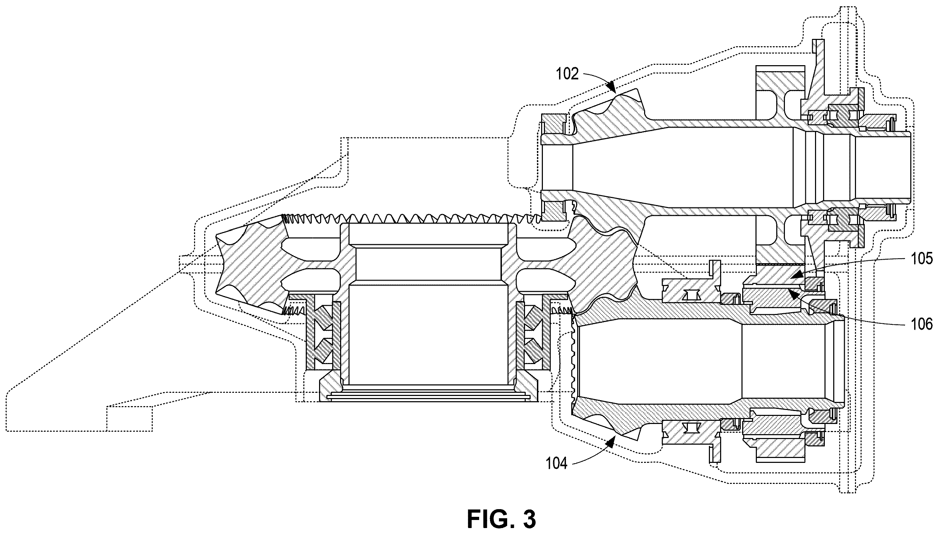

FIG. 3 is another cross-sectional view of the example gearbox 100 of FIGS. 1 and 2. In the illustrated view of FIG. 3, the CV adapter 106 is shown operatively coupling the first pinion 102 to the second pinion 104. Further, the example CV adapter 106 is positioned/arranged between the first pinion 102 to the second pinion 104. In this example, an inner diameter/surface of the CV adapter 106 includes a helical spline to engage and contact the second pinion 104 while an outer diameter/surface of the CV adapter 106 includes a straight spline to engage and contact the coupling gear 105 and/or a shoulder/adapter associated with the coupling gear 105. In some examples, the straight spine of the CV adapter 106 contacts (e.g., directly contacts) the first pinion 102. In this example, the CV adapter 106 is driven by the aforementioned coupler gear 105. In this example, the coupling gear 105 engages the first pinion 102 via a spur mesh. Further, the example first pinion 102 drives the coupling gear 105 with a portion of the input power (torque) that drives the CV adapter 106 which, in turn, drives the second pinion 104.

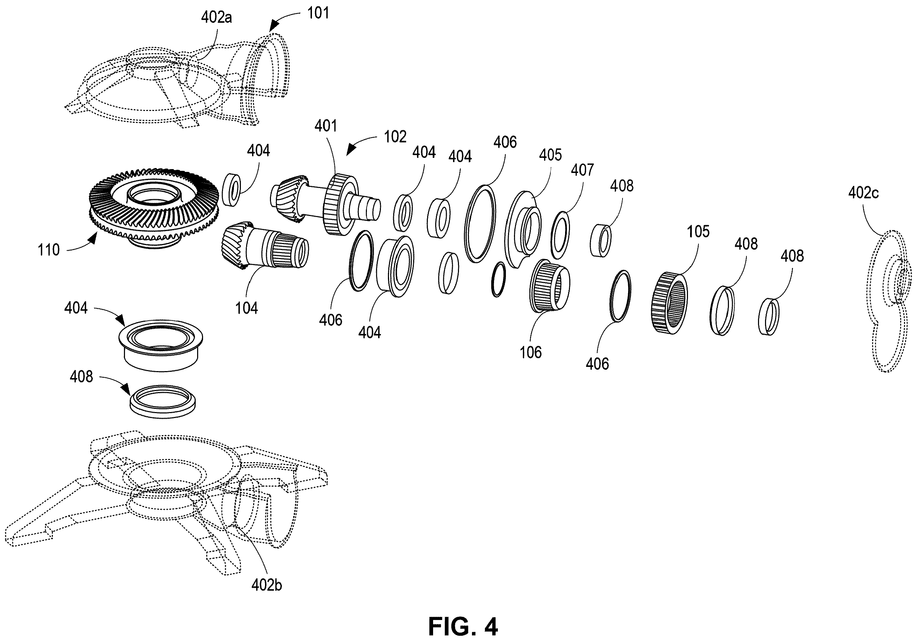

FIG. 4 is an exploded view of the example gearbox 100 of FIGS. 1-3. In this example, the gearbox 100 is shown including the housing 101 which, in turn, includes the first pinion 102 having a coupling gear (e.g., a coupling spur gear, a coupling portion, etc.) 401, the second pinion 104, the CV adapter 106, the output gear 110, as well as the aforementioned coupling gear 105. The example gearbox 100 further includes housing portions (e.g., housing panels, covers, etc.) 402a, 402b, 402c, bearings 404, a bearing cartridge 405, spacers (e.g., washers, shims, etc.) 406, a bearing retainer 407, and lock nuts (e.g., locking nuts, locking rings, etc.) 408. The example housing portion 402a corresponds to an upper housing portion while the example housing portion 402b corresponds an a lower housing portion. The arrangement shown in FIG. 4 is only an example arrangement and any other appropriate arrangement can be implemented instead. For example, an arrangement utilizing multiple bevel gears can be implemented instead. Additionally, further torque splitting pinions and/or gears (e.g., three, four, five, etc.) in addition to the first pinion 102 and the second pinion 104 can be implemented.

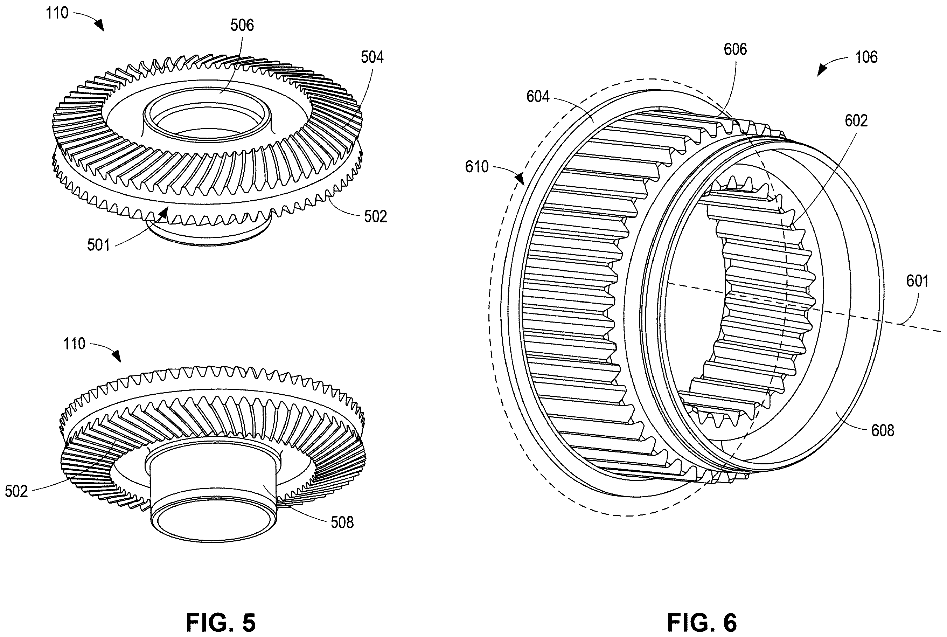

FIG. 5 is a detailed view of the example output gear 110 that can be implemented in examples disclosed herein. The output gear 110 of the illustrated example includes a body (e.g., a disc, a cylindrical body, etc.) 501 having teeth 502 on a first opposing side (e.g., a first bevel surface) of the body 501 and teeth 504 on a second opposing side (e.g., a second bevel surface) of the body 501. According to examples disclosed herein, the body 501 includes a first hub 506 and a second hub 508 extending away from the first hub 506.

According to examples disclosed herein, the output gear 110 includes identical tooth count on top and bottom sides (in the view of FIG. 5). In other words, the teeth 502, 504 are mirrored across opposing sides with respect to one another. According to some examples, disclosed herein, ratios can be identical such that pinions can also have mirrored tooth geometry and the same teeth count. Accordingly, the aforementioned mirrored tooth geometry balances axial loading, which enables a reduced thrust bearing size, a relatively flat web and/or overall flattening for an overall reduction in height, for example. Accordingly, examples disclosed herein can enable a reduction in occupied volume/size, as well as reduced weight, all of which can be highly beneficial for vehicles, such as aircraft, for example.

FIG. 6 is a detailed view of the example CV adapter 106 that can be implemented in examples disclosed herein. According to examples disclosed herein, the CV adapter 106 generally exhibits a collar shape extending along a longitudinal axis 601 thereof. As mentioned above, the CV adapter 106 is operatively coupled between the first pinion 102 and the second pinion 104 shown in FIGS. 1-4.

To transfer torque effectively in a relatively small volume, the CV adapter 106 of the illustrated examples includes a spline (e.g., an internal spline, an internal diameter spline, etc.) 602 as well as a shoulder (e.g., a flange, a base, a faying surface, etc.) 604 providing an axial clamping and positioning surface. It also includes a spline (e.g., an external spline, an external diameter spline, etc.) 606. In this example, the spline 602 is helical whereas the spline 606 is straight. Further, the example spline 602 engages the second pinion 104 while the spline 606 engages with the gear 105 and, in turn, the first pinion 102, as shown in FIGS. 1-4. In particular, the spline 606 is sufficiently straight as to enable spur installation at a desired clocking while the helical spline 602 enables continuously variable capability such that a relationship between a prime number of teeth corresponding to the internal spline 602 and teeth corresponding to the external spline 606 can provide a versatile adjustment to the clocking for torque loop closure. In the illustrated example of FIG. 6, a collar/hub 608 extends in a direction away from the aforementioned shoulder 604.

According to examples disclosed herein, a helical spline provides a continuously variable clocking and closing the torque loop. Accordingly, a helix can define a kinematic relationship between adapter axial position and its relative clocking. In some examples, a sized spacer/shim 610 may be inserted and/or placed between a spiral bevel pinion and the CV adapter 106, thereby displacing and/or moving the CV adapter 106 along a longitudinal direction of the helical spline 602 for clocking the CV adapter 106 in a repeatable process with a relatively high precision.

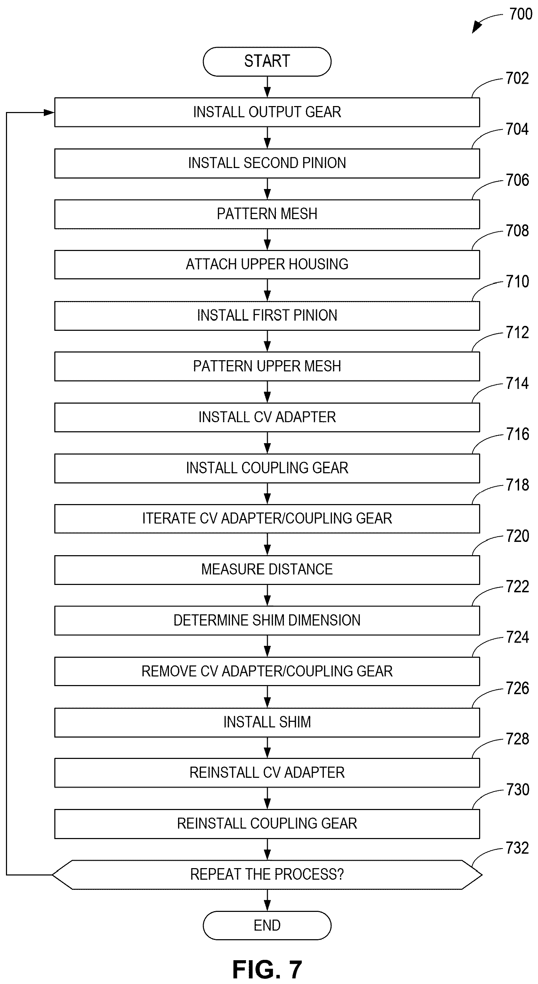

FIG. 7 is a flowchart representative of an example method 700 to produce and/or retrofit examples disclosed herein. Accordingly, the example method 700 is implemented to produce a gearbox, and begins at block 702, at which the output gear 110 is installed, placed and/or assembled to the housing portion 402b of FIG. 4. In some examples, measurements are taken for an estimate of a shim thickness, for example.

At block 704, the example second pinion 104 is placed in the housing portion 402b. Accordingly, further measurements can be taken for the estimate of shim thickness.

At block 706, in some examples, a mesh is patterned. For example, a developer is utilized on a tooth and shim thicknesses are adjusted until the developer indicates that gears are meshing properly.

At block 708, the housing portion 402b is attached and/or coupled.

At block 710, according to the illustrated example, the first pinion 102 is installed, assembled and/or placed to the housing portion 402a. In some examples, a shim/spacer thickness is estimated.

At block 712, in some examples, an upper mesh is patterned. In some example, the lower mesh is repatterned.

At block 714, the example CV adapter 106 is installed, placed and/or assembled. In this example, the CV adapter 106 is operatively coupled between the first and second pinions 102, 104. In particular, the CV adapter 106 is placed onto the second pinion 104 to engage the coupling gear 401 of the first pinion 102. In some examples, the CV adapter 106 includes a helical spline to engage the second pinion 104 and a straight spline to engage the coupling gear 401 and/or the first pinion 102.

At block 716, according to examples disclosed herein, the coupling gear 105 is installed, placed and/or assembled. In particular, the coupling gear 105 is operatively coupled and/or placed onto the CV adapter 106. According to examples disclosed herein, the coupling gear 105 is to engage a gear (e.g., a coupling gear) of the first pinion 102.

At block 718, the CV adapter 106 and the coupling gear 105 are iterated. In this example, the iteration occurs by removing both the CV adapter 106 and the coupling gear 105, clocking the CV adapter 106 by one tooth and then trying again (e.g., based on measurements for a quicker process). In some examples, this is performed until the spur teeth are nearly touching.

At block 720, in some examples, a distance is measured between nearly touching spur teeth.

At block 722, a shim dimension is determined, calculated and/or estimated. In some examples, the CV adapter 106 is moved axially to clock the teeth.

At block 724, in this example, the CV adapter 106 and the coupling gear 105 are removed. According to some examples disclosed herein, proper tooth clocking is noted and/or determined.

At block 726, the spacer/shim 406 is installed.

At block 728, the CV adapter 106 is reinstalled.

At block 730, the coupling gear 105 is reinstalled.

At block 732, it is determined whether to repeat the process. If the process is to be repeated (block 732), control of the process returns to block 702. Otherwise, the process ends. The determination may be based on whether additional gearboxes are to be produced.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

Example methods, apparatus, systems, and articles of manufacture to light-weight, cost-effective and space-saving gearboxes and/or transmissions are disclosed herein. Further examples and combinations thereof include the following:
Example 1 includes an apparatus comprising a first pinion to receive an input torque, a second pinion operatively coupled to the first pinion, an output gear operatively coupled to the first and second pinions, and a continuously variable (CV) adapter operatively coupled between the first and second pinions, the CV adapter having a helical spline.
Example 2 includes the apparatus as defined in example 1, wherein the output gear includes a bevel gear with first and second sides, and wherein the first pinion is operatively coupled to the first side and the second pinion is operatively coupled to the second side.
Example 3 includes the apparatus as defined in example 2, wherein the bevel gear is a back-to-back bevel gear having tooth geometry on the first and second sides.
Example 4 includes the apparatus as defined in any of examples 1 to 3, wherein the CV adapter includes the helical spline on an internal aperture thereof.
Example 5 includes the apparatus as defined in example 4, wherein the CV adapter includes a straight spline on an external diameter thereof.
Example 6 includes the apparatus as defined in example 4 or 5, further including a spacer between the CV adapter and the first pinion to clock the helical spline.
Example 7 includes the apparatus as defined in any of examples 1 to 6, further including a coupling gear operatively coupled between the first pinion and the CV adapter.
Example 8 includes a transmission comprising a housing, first and second torque-splitting pinions, at least one of the first or second pinions to receive a torque input, and a continuously variable (CV) adapter operatively coupled between the first and second pinions, the CV adapter including a helical spline.
Example 9 includes the transmission as defined in example 8, further including a gear operatively coupled to outputs of the first and second pinions.
Example 10 includes the transmission as defined in example 9, wherein the gear includes a first bevel surface to be driven by the first pinion, and a second bevel surface to be driven by the second pinion.
Example 11 includes the transmission as defined in example 10, wherein the first and second bevel surfaces are on opposing sides of the gear.
Example 12 includes the transmission as defined in example 11, wherein the gear includes a mirrored tooth geometry between the opposing sides.
Example 13 includes the transmission as defined in any of examples 8 to 12, wherein the CV adapter includes the helical spline on an internal aperture thereof to engage at least one of the first or second pinions.
Example 14 includes the transmission as defined in example 13, wherein the CV adapter includes a straight spline on an external surface thereof.
Example 15 includes the transmission as defined in example 14, wherein a coupling gear is operatively between CV adapter and the first pinion with the first pinion engaging the straight spline.
Example 16 includes the transmission as defined in any of examples 8 to 15, further including a spacer to displace the CV adapter to clock the helical spline.
Example 17 includes a method of producing a gearbox, the method comprising placing a continuously variable (CV) adapter between a first pinion and a second pinion to couple rotation therebetween, the CV adapter having a helical spline, the first pinion to receive a torque input, and placing an output gear to engage: (i) a first output of the first pinion and (ii) a second output of the second pinion.
Example 18 includes the method as defined in example 17, wherein placing the CV adapter between the first pinion and the second pinion includes engaging the helical spline to the second pinion.
Example 19 includes the method as defined in example 18, further including placing a coupling gear between the CV adapter and the first pinion.
Example 20 includes the method as defined in any of examples 17 to 19, wherein placing the output gear includes engaging the first output to a first bevel gear of the output gear and engaging the second output to a second bevel gear of the output gear.

From the foregoing, it will be appreciated that example systems, apparatus, articles of manufacture, and methods have been disclosed that enable compact gearboxes with reduced overall size, weight and volume. Examples disclosed herein can enable reduced bearing size and can reduce height typically necessitated of gearboxes. Examples disclosed herein can reduce gear size as well as mechanical complexity, weight, etc. Accordingly, examples disclosed herein can effectively reduce component/assembly costs.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus (100) comprising:
a first pinion (102) to receive an input torque;
a second pinion (104) operatively coupled to the first pinion;
an output gear (110) operatively coupled to the first and second pinions; and
a continuously variable, CV, adapter (106) operatively coupled between the first and second pinions, the CV adapter (106) having a helical spline.

2. The apparatus as defined in claim 1, wherein the output gear includes a bevel gear with first and second sides, and wherein the first pinion is operatively coupled to the first side and the second pinion is operatively coupled to the second side.

3. The apparatus as defined in claim 2, wherein the bevel gear is a back-to-back bevel gear having tooth geometry on the first and second sides.

4. The apparatus as defined in any of claims 1 to 3, wherein the CV adapter includes the helical spline (602) on an internal aperture thereof.

5. The apparatus as defined in claim 4, wherein the CV adapter includes a straight spline (606) on an external diameter thereof.

6. The apparatus as defined in claim 4 or 5, further including a spacer (406, 610) between the CV adapter and the first pinion to clock the helical spline.

7. The apparatus as defined in any of claims 1 to 6, further including a coupling gear (401) operatively coupled between the first pinion and the CV adapter.

8. A transmission comprising:
a housing (101);
first and second torque-splitting pinions, at least one of the first or second pinions to receive a torque input; and
a continuously variable, CV, adapter operatively coupled between the first and second pinions, the CV adapter including a helical spline.

9. The transmission as defined in claim 8, further including a gear operatively coupled to outputs of the first and second pinions.

10. The transmission as defined in claim 9, wherein the gear includes:
a first bevel surface to be driven by the first pinion; and
a second bevel surface to be driven by the second pinion.

11. The transmission as defined in claim 10, wherein the first and second bevel surfaces are on opposing sides of the gear.

12. The transmission as defined in claim 11, wherein the gear includes a mirrored tooth geometry between the opposing sides.

13. The transmission as defined in claim 8, wherein the CV adapter includes the helical spline on an internal aperture thereof to engage at least one of the first or second pinions, in particular wherein the CV adapter includes a straight spline on an external surface thereof, and wherein a coupling gear is operatively between CV adapter and the first pinion with the first pinion engaging the straight spline.

14. The transmission as defined in claim 8, further including a spacer to displace the CV adapter to clock the helical spline.

15. A method of producing a gearbox, the method comprising:
placing a continuously variable, CV, adapter between a first pinion and a second pinion to couple rotation therebetween, the CV adapter having a helical spline, the first pinion to receive a torque input; and
placing an output gear to engage: (i) a first output of the first pinion and (ii) a second output of the second pinion.
